# EUROPÄISCHE PATENTSCHRIFT

(11) **EP 0 734 943 B1**
(45) Veröffentlichungstag und Bekanntmachung des Hinweises auf die Patenterteilung: **06.10.1999**
(21) Anmeldenummer: 96104438.5
(22) Anmeldetag: 20.03.1996
(51) Int. Cl.: B62J 1/00, B62J 1/04

(54) **Fahrradsitz**
Bicycle seat
Selle de bicyclette

(30) Priorität: 31.03.1995 DE 19512016
(43) Veröffentlichungstag der Anmeldung: 02.10.1996
(73) Patentinhaber: JOSEF BERGMEISTER GmbH & Co. BAUGESCHÄFT KG, D-82418 Murnau (DE)
(72) Erfinder: Bergmeister, Josef, Jun., 82418 Murnau (DE)
(74) Vertreter: Flosdorff, Jürgen, Dr.

(56) Entgegenhaltungen:
- EP-A- 0 467 541
- DE-A- 4 232 655
- DE-U- 8 805 245
- US-A- 4 089 559

## Beschreibung

Die Erfindung betrifft einen Fahrradsitz. Obwohl der Sitz insbesondere für Fahrräder geeignet ist, ist er grundsätzlich auch für andere pedalgetriebene Fahrzeuge und beispielsweise für mit Pedalen versehene Übungs- oder Fitnessgeräte mit Vorteil verwendbar.

Der herkömmliche Fahrradsattel ist insbesondere für solche Radler, die nur gelegentlich auf ihrem Fahrrad sitzen, mit erheblichen Nachteilen verbunden. Ein schmaler Sattel, der häufig bei Rennrädern und Mountain-Bikes Verwendung findet, erzeugt eine hohe Pressung am Schambein, was zu heftigen Schmerzen führen kann, wenn der Radler nicht entsprechend abgehärtet ist. Diese schmerzhafte Begleiterscheinung beim Radeln vermeidet zwar ein breiter Sattel, der jedoch seinerseits den Nachteil hat, daß der Radler beim Treten der Pedale ständig mit seiner Sitzfläche auf dem Sattel hin- und herrutscht, was bei wiederum vorausgesetzter mangelnder Gewöhnung dazu führt, daß die Sitzfläche sich allmählich wundscheuert.

Aus EP 0 467 541, DE 8805245 U1 und US 4 089 559 sind bereits Fahrradsitze mit zwei beweglichen Sitzhälften bekannt, die gegenläufig schwenkbar gelagert sind. Durch die gegenläufige Bewegbarkeit der Sitzhälften ist weitgehend verhindert, daß der Radler beim Treten der Pedale mit seiner Sitzfläche auf dem Sattel hin- und herrutscht, wie dies bei einteiligen Fahrradsitzen der Fall ist.

Bei allen drei vorbekannten zweiteiligen Fahrradsätteln liegt der Mittelpunkt der Schwenkbewegung der Sattel-Hälften unter deren Sitzflächen, was zur Folge hat, daß die Kurbelbewegung der Beine des Radlers zu Dreh- bzw. Schwenkbewegungen im Hüftbereich führt. Hierdurch wird der Hüftbereich auf die Dauer schmerzhaft belastet.

Der vorliegenden Erfindung liegt die Aufgabe zugrunde, einen Fahrradsitz der betrachteten Art so weiter zu entwickeln, daß er einen besseren, den Radler schonenden Bewegungsablauf ermöglicht.

Diese Aufgabe wird erfindungsgemäß durch die im Kennzeichen des Patentanspruchs 1 angegebenen Merkmale gelöst.

Vorteilhafte Weiterbildungen der Erfindung sind in den Unteransprüchen gekennzeichnet.

Der erfindungsgemäße Sitz enthält zwei bewegliche Sitzhälften, die gegenläufig schwenkbar gelagert sind. Diese Sitzhälften werden beim Treten der Pedale gegenläufig bewegt, und zwar wird diejenige Sattelhälfte in Fahrtrichtung gesehen nach hinten und nach oben verschwenkt, deren zugeordneter Fuß des Radlers sich beim Pedaltritt nach unten bewegt, während die andere Sitzhälfte, deren zugeordneter Fuß sich gleichzeitig in die angehobene Stellung bewegt, nach vorne und nach unten verschwenkt wird. Diese Bewegungen kehren sich entsprechend um, wenn die Pedale den tiefsten bzw. höchsten Punkt des Pedaltritts durchlaufen haben.

Damit passen sich die Sitzhälften selbsttätig an die Bewegung des Oberschenkels und der anschließenden Sitzfläche des Radlers an, so daß der Radler auf den Auflageflächen der Sitzhälften nicht rutscht, sondern ohne Relativbewegung auf diesen aufruht. Da die Auflageflächen, die schalenförmig sein können, gegenüber herkömmlichen Satteln verhältnismäßig groß sein können, ist zudem eine schmerzhafte Pressung zuverlässig vermieden.

Weiter ist erfindungsgemäß vorgesehen, daß der Mittelpunkt der Schwenkbewegung der Sitzhälften oberhalb deren Sitzflächen liegt, und zwar in einem Abstand von ca. 5-15 cm von den Sitzflächen, so daß die Schwenkachse etwa im Bereich des Hüftgelenks des Benutzers liegt.

Diese Ausbildung hat zur Folge, daß das Hüftgelenk des Radlers beim Pedaltritt im wesentlichen seine Lage beibehält, wodurch der Bewegungsablauf erheblich glatter verläuft und das Radfahren auch über eine lange Zeitspanne hinweg selbst für ungeübte Radler angenehmer wird.

Die Auflageflächen der Sitzhälften können durch Kunststoffschalen gebildet sein, die an die zugeordneten Konturen des oberen Teils des Oberschenkels und der anschließenden Sitzfläche des Radlers angepaßt sind. Die Auflagerschalen können natürlich gepolstert sein, wobei grundsätzlich auch eine federnde Lagerung möglich ist. An der Außenseite kann die schalenförmige Auflagefläche hochgezogen sein, um dem Radler einen seitlichen Halt auf den Sitzhälften zu bieten.

In weiterer Ausgestaltung der Erfindung wird vorgeschlagen, daß die Sitzhälften auf Rollen gelagert sind, die zweckmäßigerweise an den freien Enden von Stahlstangen auf Kugellagern gelagert sind. Die Stahlstangen mit den Lagerrollen können beidseitig von einem Chassis abstehen, welches auf einem serienmäßigen Sattelrohr des Fahrrades angebracht sein kann.

Die Sitzhälften können durch gewölbte Flacheisen gebildete, bevorzugt kreisbogenförmige Wälzlagerflächen unter den Auflageflächen haben, wobei an der Unter- und Oberseite der Wälzlagerfläche die Lagerrollen anliegen. Beispielsweise stützen zwei Rollen die Wälzlagerfläche von unten ab, während eine auf der Oberseite der Wälzlagerfläche aufliegende Rolle das Abheben der Sitzhälfte nach oben verhindert. Seitlich können beispielsweise Begrenzungsscheiben oder reibungsarme seitliche Führungen anderer Art die Randkante der Wälzlagerfläche übergreifen, wodurch ein seitliches Wandern auf den Rollen verhindert ist .

Die Sitzhälften können selbstverständlich verkleidet sein, wodurch unter anderem verhindert ist, daß Fremdpartikel sich auf oder an der Wälzlagerfläche festsetzen, die eine glatte Schwenkbewegung der Sitzhälften verhindern könnten.

Die schwenkbare Halterung der Sitzhälften kann aber auch auf andere Weise realisiert werden. Die Sitzhälften können beispielsweise schwenkbar an einem Rahmen aufgehängt sein, der bevorzugt eine U-Form hat und beispielsweise an einem hinter dem serienmäßig vorgesehenen Sattelrohr des Fahrrades angebrachten zusätzlichen Gestänge befestigt sein kann. Bei dieser Ausführungsfom kann jede Sitzhälfte an der Außenseite einen von der Auflagefläche nach oben verlaufenden Befestigungsabschnitt haben, dessen oberes Ende auf einem Gelenkzapfen sitzt, der in dem zugehörigen vertikalen Schenkel des U-förmigen Rahmens gehalten ist. Diese schwenkbare Halterung ist so ausgebildet, daß die Auflageflächen der Sitzhälften im Querschnitt im wesentlichen horizontal verlaufen.

Auch bei dieser Ausgestaltung der Erfindung werden beim Pedaltritt die beiden Sitzhälften um eine im Bereich des Hüftgelenks des Radlers liegende Achse gegenläufig verschwenkt, so daß die Lage des Hüftgelenks des Radlers konstant bleibt und kein Rutschen auf den Auflageflächen des Fahrradsitzes erfolgt.

Die Erfindung ist nicht auf die oben beschriebenen schwenkbaren Halterungen der Sitzhälften beschränkt, sondern sie kann auch durch andere Ausführungsformen realisiert werden. So können die Sitzhälften auch jeweils auf zwei Gelenkstäben aufruhen, die voneinander beabstandet unterhalb der Auflagerschale und mit ihren anderen Enden auf einem Rahmenteil angelenkt sein können, wobei die Abmessungen und Geometrie der Anordnung so getroffen sein sollten, daß die Sitzhälften eine begrenzte Schwenkbewegung eines ausreichenden Schwenkbereichs ausführen können. Die Stäbe verlaufen dabei zweckmäßigerweise im Winkel zueinander und können unterschiedliche Längen haben. Auch in diesem Fall verschwenkt sich die eine Sitzhälfte in Fahrtrichtung gesehen rückwärts und nach oben, wenn sich das Pedal der betrachteten Seite der unteren Stellung nähert, in der das Bein des Radlers zunehmend in den gestreckten Zustand übergeht, während die andere Sitzhälfte nach vorne und in eine etwa horizontale Lage verschwenkt wird.

Nach einem weiteren Vorschlag der Erfindung ist der Abstand der Sitzhälften voneinander einstellbar. Dies kann z.B. dadurch bewerkstelligt werden, daß der Abstand der Rollen von dem sie haltenden Chassis einstellbar ist, oder dadurch, daß der U-förmige Rahmen, an dem die Sitzhälften aufgehängt sind, teleskopartig breitenverstellbar ist.

Mit großem Vorteil wird ferner vorgeschlagen, daß in der Mitte zwischen den Sitzhälften ein Zentrierelemente angeordnet ist. Dieses Zentrierelement, das ein längliches Bauteil beispielsweise in der Form eines kleinen, sehr schmalen Sattels haben kann und wie dieser mit einer gepolsterten Oberfläche ausgestattet sein kann, sollte an einer solchen Stelle angeordnet sein, daß es Kontakt mit dem Schambein des Radlers hat, ohne daß Gewicht auf dem Zentrierelement aufruht. Das Zentrierelement liegt damit etwas höher und in Fahrtrichtung vor den Sitzhälften. Dieses Zentrierelement, das auch zwischen den Oberschenkeln des Radlers angeordnet sein kann, gibt dem Radler einen zusätzlichen Seitenhalt.

Nach einem weiteren Vorschlag der Erfindung können die beiden Sitzhälften so miteinander gekoppelt sein, daß sie zwangsweise gegenläufig bewegbar sind. Hierzu kann beispielsweise an dem Fahrradrahmen vor den beiden Sitzhälften an geeigneter Stelle eine Umlenkrolle befestigt sein, über die ein Drahtzug oder dergleichen verläuft, der an den beiden Sitzhälften befestigt ist. Wenn bei dieser Ausgestaltung die eine Sattelhälfte nach hinten bewegt wird, wenn sich das zugeordnete Pedal der unteren Lage nähert, wird zwangsläufig die andere Sitzhälfte nach vorne gezogen. Diese automatische Unterstützung der Vorwärtsbewegung der jeweiligen Sitzhälfte kann auch durch einen geeigneten anderen Mechanismus oder eine andersartige Koppelung der Sitzhälften bewerkstellig werden. Es wird betont, daß diese Anordnung zum Hervorrufen einer zwangsweisen gegenläufigen Bewegung der beiden Sitzhälften bei allen vorstehend beschriebenen Ausführungsformen vorgesehen sein kann, aber nicht unbedingt erforderlich ist.

Nach einem weiteren Vorschlag der Erfindung kann der Abstand der Schwenkachse von den Sitzflächen der Sitzhälften verstellbar sein, beispielsweise indem die Länge der oberen Haltearme der Sitzhälften oder die Länge der oder Lage der Stützstangen unter den Sitzhälften veränderbar ist, so daß die Lage der Schwenkachse individuell in übereinstimmung mit dem Hüftgelenk gebracht werden kann.

Mit dem erfindungsgemäßen Fahrradsitz können auch solche Personen, die nur gelegentlich radeln, große Strecken zurücklegen, ohne daß der Fahrradsitz Schmerzen hervorruft. Da die gegenläufigen Kurbelbewegungen der Beine durch eine entsprechend gegenläufige Verschwekung der Sitzhälften ausgeglichen wird, und sich die Schwenkachse im Bereich des Hüftgelenks des Radlers befindet, ändert sich die Lage des Hüftgelenks des Radlers nicht (oder nur minimal), wodurch der Bewegungsablauf glatter verläuft. Außerdem ermöglicht der Sattel eine aufrechte, ergonomische Sitzhaltung, wodurch das Radfahren auch über eine lange Zeitspanne hinweg angenehmer wird.

Nachfolgend werden drei Ausführungsformen der Erfindung anhand der Zeichnung näher beschrieben. Dabei zeigen:
- Fig. 1: eine weitgehend schematische perspektivische Darstellung eines Fahrradsitzes, dessen Sitzhälften gegenläufig verschwenkt sind;
- Fig. 2: eine Seitenansicht eines Fahrrades mit dem Fahrradsitz gemäß Fig. 1 mit einem Radler, dessen linkes Bein gestreckt ist;
- Fig. 3: eine Darstellung ähnlich Fig. 2, jedoch bei angewinkeltem linken Bein des Radlers;
- Fig. 4: eine schematische Rückansicht einer zweiten Ausführungsform des Fahrradsitzes;
- Fig. 5: die linke Sitzhälfte der Ausführungsform gemäß Fig. 4 in der unteren Pedalstellung;
- Fig. 6: die linke Sitzhälfte in der oberen Pedalstellung;
- Fig. 7: die linke Sitzhälfte einer dritten Ausführungsform des Fahrradsitzes in der angehobenen Pedalstellung und
- Fig. 8: die Sitzhälfte gemäß Fig. 7 in der unteren Pedalposition.

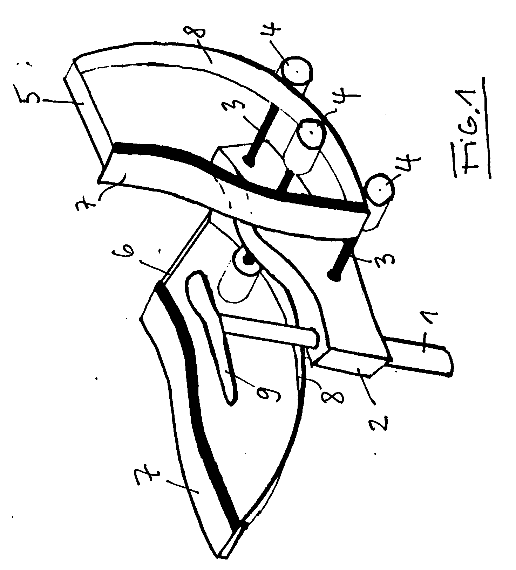

Die Figuren 1 bis 3 zeigen eine erste Ausführungsform des Fahrradsitzes, wobei -ebenso wie in den nachfolgenden Figuren- nur die hauptsächlichen Bestandteile des Fahrradsitzes dargestellt sind.

Auf dem serienmäßigen Sattelrohr 1 sitzt höhenverstellbar ein Chassis 2, an dem seitlich abstehende Stangen 3 befestigt sind, die an ihren freien Enden Rollenlager 4 halten.

Diese Anordnung dient der schwenkbaren Halterung zweier Sitzhälften 5, 6, die jeweils eine Auflagerschale 7, auf der die Sitzfläche des Radlers aufruhrt, und eine aus einem gewölbten Flacheisen gebildete Wälzlagerfläche 8 aufweisen. Die Sitzhälften 5, 6 liegen mit ihren Wälzlagerflächen 8 jeweils auf zwei Rollenlagern auf, während auf der Oberseite der Wälzlagerfläche 8 eine dritte Lagerrolle 4 aufliegt, die ein Abheben der Sitzhälften 5, 6 nach oben verhindert. Nicht dargestellte Begrenzungselemente verhindern ein seitliches Wandern der Sitzhälften 5, 6.

In Fahrtrichtung vor den Sitzhälften ist ein Zentrierelement 9 höhenverstellbar an dem Chassis 2 befestigt. Das Zentrierelement 9 hat die Form eines sehr schmalen, kleinen Sattels und ist entsprechend gepolstert. Das Zentrierelement gibt dem Radfahrer einen zusätzlichen seitlichen Halt auf dem Fahrradsitz.

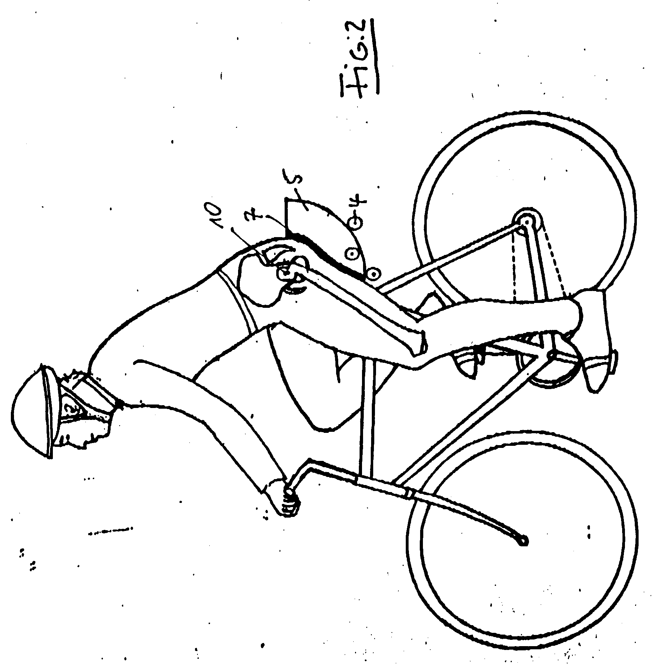

Fig. 1 zeigt den Fahrradsitz für den Fall, daß der Radler die in Fig. 2 dargestellte Stellung innehat, bei der sich das linke Pedal in der tiefsten Stellung befindet, in der das linke Bein des Radlers nahezu gestreckt ist. In dieser Lage ist die Sitzhälfte 5 zurück und nach oben verschwenkt, so daß die Auflagefläche 7 -entsprechend der Stellung des Oberschenkels des Radlers- eine steile Schräglage einnimmt.

In der angehobenen Stellung des linken Fußes des Radlers wird die Sitzhälfte 5 nach vorne verschwenkt, wobei die Auflagefläche 7 nur noch schwach nach vorne geneigt ist.

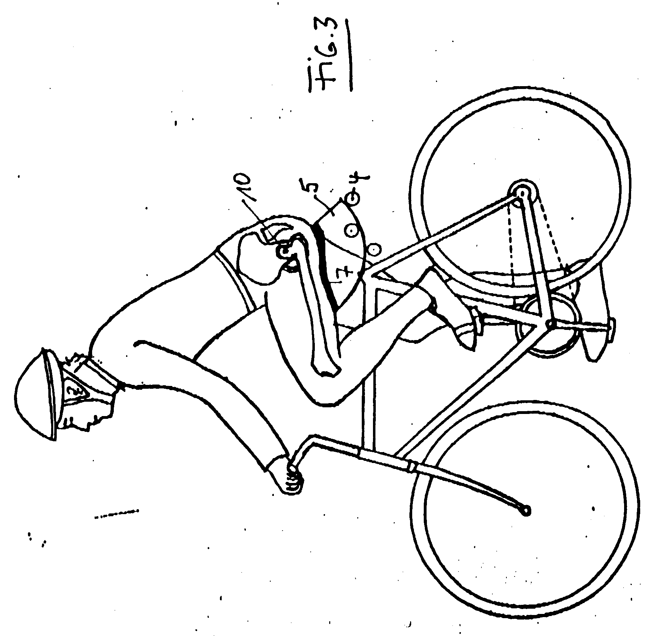

In den Figuren 2 und 3 ist das Skelett des Radlers im Bereich seines Hüftgelenks abgebildet. Aus der Darstellung geht hervor, daß die Lage des Hüftgelenks während der Kurbelbewegung der Beine praktisch unverändert bleibt. Dies wird dadurch erreicht, daß die Wälzlagerfläche 8 die Form eines Kreisbogenabschnitts hat, dessen Mittelpunkt im Bereich des Hüftgelenks 10 liegt. Der Abstand a des Mittelpunkts 10 der Schwenkbewegung von der Sitzfläche beträgt ca. 5-15 cm.

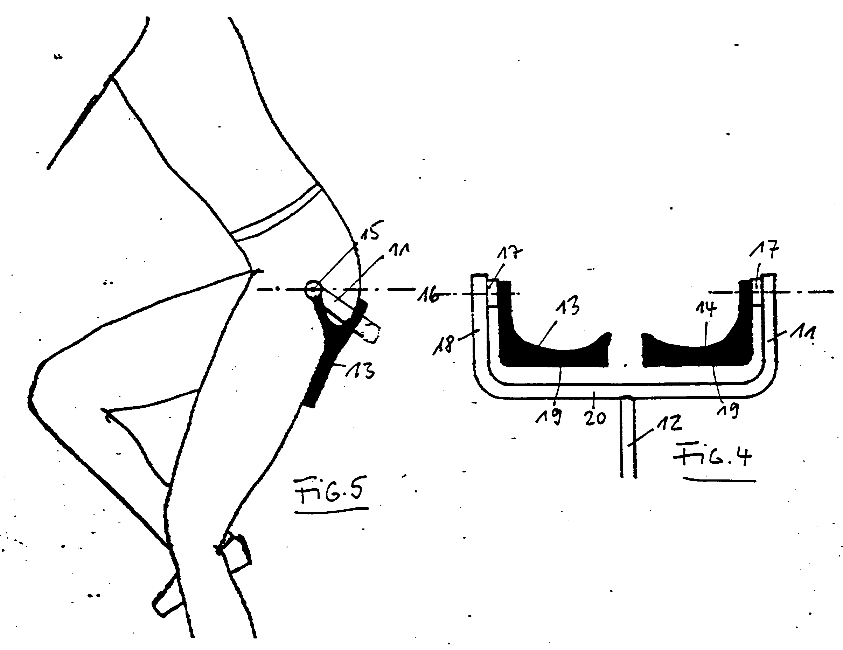

Fig. 4 zeigt rein schematisch eine zweite Ausführungsform des Fahrradsitzes. Hierbei ist ein U-förmiger Rahmen 11 mittels eines Rohres 12 am Fahrradrahmen befestigt. Zwei Sitzhälften 13, 14, die als Kunststoffschalen ausgebildet sind, sind über Gelenkzapfen 15 an den oberen Enden des U-förmigen Rahmens 11 angelenkt, wobei die Gelenke auf einer gemeinsamen Achse 16 liegen. Die Sitzhälften 13, 14 sind dabei durch Abstandhalter 17 im Abstand zu den vertikalen Schenkeln 18 gehalten, wobei ihr im wesentlichen horizontaler Auflageabschnitt 19 natürlich auch im Abstand zu dem horizontalen Schenkel 20 des U-förmigen Rahmens 11 und im wesentlichen parallel zu diesem gehalten wird.

Die beiden Sitzhälften 13, 14 werden beim Pedaltritt ebenfalls gegenläufig verschwenkt, wie dies bei der ersten Ausführungsform der Fall ist. Die Achse 16 bzw. die Gelenke 15 befinden sich im wesentlichen in der Lage des Hüftgelenks des Radlers.

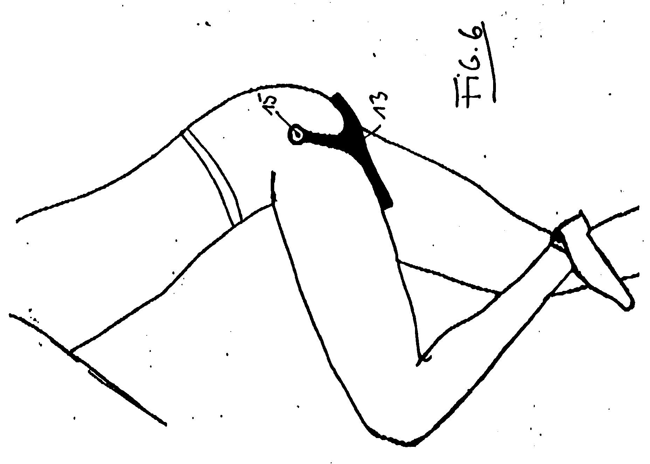

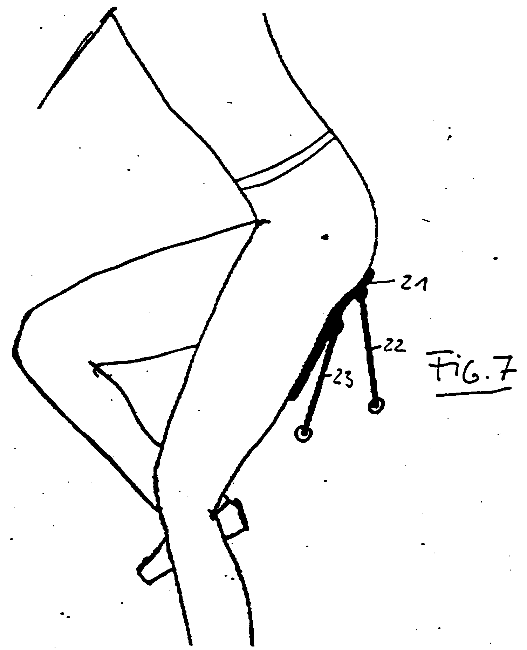

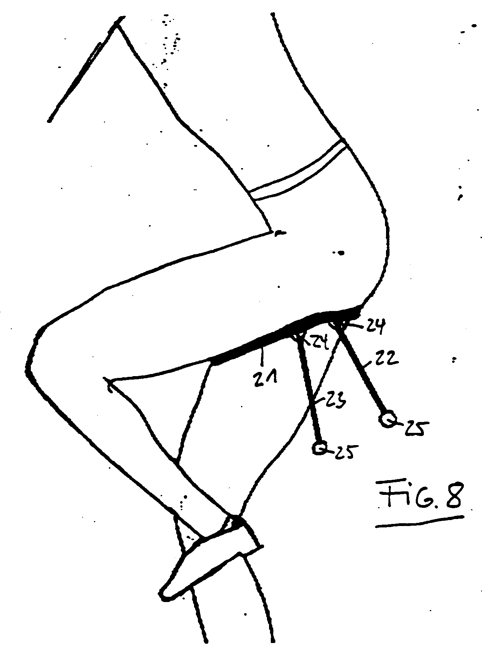

Die in den Figuren 7 und 8 schematisch dargestellte Ausführungsform enthält Auflagerschalen 21, an deren Unterseite jeweils zwei Stangen 22, 23 angelenkt sind, deren anderes Ende an einem nicht dargestellten Chassis oder Rahmenteil gelenkig befestigt ist. Die oberen Anlenkpunkte 24 haben einen kleineren Abstand voneinander als die unteren Anlenkpunkte 25.

Auch bei dieser Ausführungsform sind die Sitzhälften gegenläufig verschwenkbar, wie Fig. 7 und Fig. 8 für die tiefste und die höchste Pedalposition zeigen. Die Abmessungen und die Geometrie der Anordnung sind so getroffen, daß der Mittelpunkt der Schwenkbewegung wiederum mit der Lage des Hüftgelenks des Radlers im wesentlichen übereinstimmt.

## Patentansprüche

1. Fahrradsitz, mit zwei beweglichen Sitzhälften (5, 6, 13, 14, 21), die ggenläufig schwenkbar sind,
**dadurch gekennzeichnet**,
daß der Mittelpunkt bzw. die Achse (16) der Schwenkbewegung der Sitzhälften oberhalb der Sitzfläche der Sitzhälften liegt.

2. Fahrradsitz nach Anspruch 1,
dadurch gekennzeichnet, daß der Abstand des Mittelpunkts der Schwenkbewegung von den Sitzflächen etwa 5-15 cm beträgt.

3. Fahrradsitz nach einem der Ansprüche 1 oder 2,
dadurch gekennzeichnet, daß die Sitzhälften (5, 6) auf Rollen (4) gelagert sind.

4. Fahrradsitz nach Anspruch 3,
dadurch gekennzeichnet, daß die Sitzflächen (5, 6) jeweils eine kreisbogenförmige Wälzlagerfläche (8) aufweisen, an deren Unter- und Oberseite Lagerrollen (4) anliegen.

5. Fahrradsitz nach einem der Ansprüche 1 oder 2,
dadurch gekennzeichnet, daß die Sitzhälften (13, 14) schwenkbar an einem Rahmen (11) aufgehängt sind.

6. Fahrradsitz nach Anspruch 5,
dadurch gekennzeichnet, daß jede Sitzhälfte (13, 14) an der Außenseite einen von der Auflagefläche (19) nach oben verlaufenden Befestigungsarm aufweist, dessen oberes Ende auf einem von dem Rahmen (11) gehaltenen Gelenkzapfen sitzt.

7. Fahrradsitz nach einem der Ansprüche 1 oder 2,
dadurch gekennzeichnet, daß jede Sitzhälfte (21) auf zwei Gelenkstäben (22, 23) aufruht, die einenends unterhalb der Auflagefläche und anderenends an einem Rahmen angelenkt sind, wobei die oberen Anlenkpunkte (24) einen geringen Abstand voneinander haben als die unteren Anlenkpunkte (25).

8. Fahrradsitz nach einem der Ansprüche 1 bis 7,
dadurch gekennzeichnet, daß der Abstand des Mittelpunkts der Schwenkbewegung von den Sitzflächen verstellbar ist.

9. Fahrradsitz nach einem der Ansprüche 1 bis 8,
dadurch gekennzeichnet, daß in der Mittel zwischen den Sitzhälften (5, 6) ein Zentrierelement (9) angeordnet ist.

10. Fahrradsitz nach einem der Ansprüche 1 bis 9,
dadurch gekennzeichnet, daß die Sitzhälften zur zwangsweisen gegenläufigen Bewegung miteinander gekoppelt sind.

## Claims

1. A bicycle seat comprising two movable seat halves (5,6,13,14,21) that are pivotable in opposite directions,
**characterized in**
that the center point and the axis (16), respectively of the pivotal movement of said seat halves are positioned above the seat surface of said seat halves.

2. A bicycle according to claim 1,
characterized in that the distance of the center point of the pivotal movement from the seat surfaces is about 5 to 15 cm.

3. A bicycle seat according to claim 1 or 2,
characterized in that said seat halves (5,6) are supported on rollers (4).

4. A bicycle according to claim 3,
characterized in that each of said seat halves (5,6) has a roller bearing surface (8) shaped in the manner of a circular arc, on the bottom and upper sides of which bearing rollers (4) rest.

5. A bicycle seat according to claim 1 or 2,
characterized in that said seat halves (13,14) are pivotably suspended on a frame (11).

6. A bicycle seat according to claim 5,
characterized in that each of said seat halves (13,14) is provided on its outside with a fastening arm which extends upwards from said support surface (19) and whose upper end is seated on a pivot pin held by said frame (11).

7. A bicycle seat according to claim 1 or 2,
characterized in that each of said seat halves (21) rests on two articulated rods (22,23) which, at one end, are articulated below said support surface and, at the other end, to a frame, the upper articulation points (24) having a smaller distance from each other than the lower articulation points (25).

8. A bicycle seat according to any of claims 1 to 7,
characterized in that the distance of the center point of the pivotal movement from said seat surfaces is adjustable.

9. A bicycle seat according to any of claims 1 to 8,
characterized in that a centering element (9) is arranged in the center between said seat halves (5,6).

10. A bicycle seat according to any of claims 1 to 9,
characterized in that said seat halves are coupled with each other for a forced opposite movement.

## Revendications

1. Siège de bicyclette avec deux moitiés de siège mobiles (5, 6, 13, 14, 21) pouvant être amenées à pivoter selon un mouvement opposé,
caractérisé en ce que le centre respectivement l'axe (16) du mouvement de pivotement des moitiés de siège se situe au-dessus de la surface de siège des moitiés de siège.

2. Siège de bicyclette suivant la revendication 1,
caractérisé en ce que l'écart du centre du mouvement de pivotement relativement aux surfaces de siège est environ de 5-15 cm.

3. Siège de bicyclette selon l'une des revendications 1 ou 2,
caractérisé en ce que les moitiés de siège (5, 6) sont logées sur des rouleaux (4).

4. Siège de bicyclette selon la revendication 3,
caractérisé en ce que les surfaces de siège (5, 6) présentent respectivement une face de palier à roulement (8) en forme d'arc de cercle, aux côtés inférieur et supérieur de laquelle s'appliquent des rouleaux de palier (4).

5. Siège de bicyclette selon l'une des revendications 1 ou 2,
caractérisé en ce que les moitiés de siège (13, 14) sont accrochées d'une manière pivotante à un châssis (11).

6. Siège de bicyclette selon la revendication 5,
caractérisé en ce que chaque moitié de siège (13, 14) présente au côté extérieur un bras de fixation s'étendant depuis la face d'application (19) vers le haut, dont l'extrémité supérieure repose sur un pivot retenu par le châssis (11).

7. Siège de bicyclette selon l'une des revendications 1 ou 2,
caractérisé en ce que chaque moitié de siège (21) repose sur deux tiges d'articulation (22, 23) qui sont articulées à une extrémité en dessous de la face d'appui et à l'autre extrémité à un châssis, où les points d'articulation supérieurs (24) sont disposés à une plus petite distance les uns des autres que les points d'articulation inférieurs (25).

8. Siège de bicyclette selon l'une des revendications 1 à 7,
caractérisé en ce que l'écart du centre du mouvement de pivotement relativement aux surfaces de siège est ajustable.

9. Siège de bicyclette selon l'une des revendications 1 à 8,
caractérisé en ce qu'il est disposé au milieu entre les moitiés de siège (5, 6) un élément de centrage (9).

10. Siège de bicyclette selon l'une des revendications 1 à 9,
caractérisé en ce que les moitiés de siège, en vue d'un mouvement contraire forcé, sont accouplées l'une à l'autre.
